# FASCICULE DE BREVET EUROPEEN

(11) **EP 0 599 795 B1**
(45) Date de publication et mention de la délivrance du brevet: **22.09.1999**
(21) Numéro de dépôt: 93870213.1
(22) Date de dépôt: 10.11.1993
(51) Int. Cl.: C10G 1/10

(54) **Procédé de conversion de polymères**
Verfahren zur Umwandlung von Polymeren
Polymer conversion process

(30) Priorité: 24.11.1992 BE 9201018
(43) Date de publication de la demande: 01.06.1994
(73) Titulaire: PETROFINA S.A., B-1040 Bruxelles (BE)
(72) Inventeur: de Broqueville, Axel, B-1950 Kraainem (BE)
(74) Mandataire: Leyder, Francis

(56) Documents cités:
- US-A- 4 108 730

## Description

La présente invention se rapporte à la conversion de polymères, particulièrement de déchets de polymères, en produits industriellement utiles. Plus particulièrement, elle se rapporte à la conversion de mélanges de polymères en produits à plus bas poids moléculaire et notamment en hydrocarbures légers qui peuvent être recyclés ou utilisés comme matière première.

Les polymères sont produits en quantités de plus en plus importantes; la plus grande partie est utilisée dans le secteur de l'emballage à usage unique.

Toutefois, leur faible propension à la décomposition naturelle, couplée à la diminution du nombre des terrains de décharge disponibles, incite à rechercher d'autres voies pour traiter les emballages usagés en matériaux polymères.

L'incinération, technique fréquemment utilisée pour le traitement des déchets ménagers, donne de bons résultats avec les polyoléfines, dont la combustion complète et dans les règles de l'art donne de l'eau et du dioxyde de carbone, mais convient moins à d'autres polymères qui s'incinèrent moins bien, tendent à carboniser et à donner des fumées nocives.

Le recyclage des polymères en tant que tels ne s'applique que pour des applications limitées et nécessite, après collecte, un triage préalable selon leur nature.

Il existe donc un besoin pour un procédé de conversion à grande échelle de polymères, particulièrement de déchets de polymères mélangés, en produits à plus bas poids moléculaire et notamment en hydrocarbures plus légers qui puissent être recyclés ou utilisés comme matière première, par exemple pour approvisionner des raffineries de pétrole et des vapocraqueurs pétrochimiques.

Le comportement des polymères à haute température, le cas échéant en présence de catalyseurs ou réactifs appropriés, a été étudié depuis de nombreuses années et est bien connu de l'homme de l'art. Il résulte, selon les cas, en une dépolymérisation (par exemple lors de la pyrolyse du polystyrène ou de la méthanolyse ou l'hydrolyse du polyéthylène téréphtalate) ou en une décomposition (par exemple lors du traitement catalytique du polyéthylène).

Ainsi, le brevet US-A-4151216 décrit le craquage catalytique du polypropylène à 425-475°C sur silice-alumine, donnant un combustible liquide dès 50°C.

Le brevet US-A-4108730 décrit un procédé de conversion de déchets de polymères en produits plus intéressants, dans lequel on mélange les déchets dans un courant pétrolier réfractaire avant de procéder au craquage catalytique du mélange.

Le brevet US-A-4143086 décrit le craquage catalytique en lit fluidisé du polypropylène amorphe en présence d'une charge d'hydrocarbure, donnant un effluent contenant du propylène.

La demande de brevet EP-A-414439 décrit la conversion de polymères à haut poids moléculaire en produits à plus bas poids moléculaire en chauffant le polymère (éventuellement dissous) au contact d'un catalyseur zéolithique acide.

La demande de brevet EP-A-276081 et le brevet US-4584421 décrivent des procédés de décomposition de polyoléfines en deux étapes, consistant en un craquage thermique suivi d'un craquage catalytique du produit de la première réaction.

Toutefois, ces procédés n'envisagent pas le traitement de mélanges de polymères divers pouvant contenir un pourcentage élevé d'impuretés et les problèmes qui en découlent.

Il semble dès lors important et nécessaire à notre époque de pouvoir disposer d'un procédé simple, comportant un minimum d'étapes, et qui permette le traitement de mélanges de polymères.

La Demanderesse a maintenant mis au point un procédé intégré de conversion de polymères, particulièrement adapté au traitement des déchets de polymères, en produits industriellement utiles.

Le procédé de conversion de polymères selon l'invention comprend au moins les étapes de :
(1) mise en contact des polymères, broyés ou non, avec un solvant formé d'une coupe hydrocarbonée ayant une température d'ébullition supérieure à 180°C et composée majoritairement d'hydrocarbures aromatiques;
(2) extraction des gaz de décomposition se formant à l'étape (1);
(3) récupération d'une solution de polymères dont on a éliminé la majorité des déchets insolubles lourds et légers
(4) traitement de cette solution de polymères par un procédé de craquage choisi parmi le craquage thermique et le craquage catalytique.

Le procédé de l'invention est particulièrement adapté au traitement de déchets d'emballage souillés. Ces déchets contiennent essentiellement les polymères suivants :
- polyéthylène (PE) haute et basse densité
- polypropylène (PP)
- polystyrène (PS)
- chlorure de polyvinyle (PVC)
- polyéthylène téréphtalate (PET).

Ces polymères, récupérés sous forme de films, corps creux, raviers, ou mousse, ne sont généralement pas triés selon leur nature. Avant de les traiter, on peut les déchiqueter ou les broyer en poudre ou en copeaux pour réduire le temps de dissolution et, le cas échéant, les nettoyer et enlever les fractions non polymères (papier, métal, ...) bien que ce procédé doive permettre de se passer de nettoyage. En effet, après un séjour suffisamment long dans une cuve à plus de 120° C, les déchets organiques et autres débris insolubles (papier, métal, verre, etc...) peuvent être séparés aisément de la solution (par sédimentation, filtration ou centrifugation) en vue de leur incinération et de leur mise en décharge.

Le mélange des polymères est mis en contact avec un solvant constitué d'une coupe hydrocarbonée ayant une température d'ébullition supérieure à 180°C et composée majoritairement d'hydrocarbures aromatiques. Sa densité sera inférieure à 1 et de préférence entre 0,88 et 0,98 ou mieux entre 0,92 et 0,96. Le solvant préféré est l'huile de cycle, légère (distillant entre 180 et 350°C, de préférence 220-350°C) ou lourde (distillant à partir de 350°C) ou encore un mélange des deux, et de préférence celle distillant entre 250 et 350°C. Le solvant a de préférence un rapport entre les hydrocarbures aromatiques monocycliques et bicycliques compris entre 2:1 et 1:2, de préférence d'environ 1:1.

Selon un mode d'exécution du procédé de l'invention, on réalise la dissolution en une étape. Les conditions opératoires préférées comprennent une température allant de 120 à 350°C en fonction du solvant utilisé. Ainsi, on travaillera de préférence à une température de 150 à 200°C avec de l'huile de cycle légère comme solvant. Les débits en polymères broyés et en solvant ainsi que le temps de contact sont ajustés de telle sorte que les polymères solubles soient pratiquement totalement dissous pour donner une solution aussi concentrée que possible (généralement contenant de 10 à 20 % en poids de polymère).

Après mélange et décantation, on récupère
- une partie légère à la surface,
- une partie lourde insoluble au fond,
- des particules solides en suspension.
- une solution de polymères

Selon un autre mode d'exécution du procédé, on réalise la dissolution en deux étapes, la première à une température d'environ 120 à 250°C, de préférence de 150 à 200°C, la seconde à une température d'environ 250 à 400°C, de préférence environ 300°C.

Dans la première étape, on introduit un solvant chauffé comme l'huile de cycle légère (LCO), lourde (HCO) ou un mélange des deux, ainsi que les déchets plastiques. On peut aussi chauffer le mélange par une source de chaleur extérieure. Dès que la température dépasse environ 120°C, le chlorure de polyvinyle (PVC) éventuellement présent, fond et se décompose, selon une réaction autocatalytique, en donnant de l'acide chlorhydrique et un squelette hydrocarboné comportant des liaisons insaturées. Selon un mode d'exécution préféré de l'invention, on neutralise l'acide dégagé, par exemple avec de l'oxyde de calcium. On peut également traiter la solution contenant le PVC pour saturer tout ou partie des liaisons insaturées sur le squelette hydrocarboné, par exemple par addition diénophile.
Les autres polymères présents dans le mélange fondent ou se décomposent ou se retrouvent avec les autres insolubles en suspension dans la solution généralement très visqueuse et agitée.

Ce mélange est envoyé vers la deuxième étape où, après diminution de la viscosité par élévation de la température à une valeur comprise entre 250°C et 400°C en fonction du solvant utilisé, et après les opérations usuelles de mélange, décantation, etc..., la partie légère insoluble dans le solvant est récupérée à la surface de celui-ci, tandis que la partie lourde insoluble dans le solvant est récupérée au fond. La partie lourde éliminée comprend notamment les matières organiques calcinées, le verre, le sable, les pierres, des particules métalliques, des polymères de haute densité non fusibles, ainsi que les particules en suspension qui ont décanté.

Quel que soit le mode d'exécution particulier choisi pour les étapes de mise en solution, on convertit au moins une matière polymère dissoute comme décrit ci-avant en produits à plus bas poids moléculaire.

Selon un mode d'exécution, on chauffe la solution de polymères et on l'envoie dans un réacteur de craquage thermique. Le produit principal de cette réaction est un mélange composé essentiellement d'hydrocarbures normalement liquides qui peuvent être recyclés en raffinerie de pétrole ou dans des vapocraqueurs pétrochimiques; l'huile de cycle légère est peu sensible au craquage thermique et peut après séparation être recyclée dans le procédé de l'invention ainsi que les hydrocarbures craqués lourds dont la température de distillation est comparable à celle du solvant. Ces hydrocarbures sont recyclés pour craquage en fractions plus légères.

Selon un autre mode d'exécution, le craquage est réalisé dans un réacteur de craquage catalytique. Les catalyseurs utilisés, les conditions de réaction et les produits obtenus sont bien connus (par exemple du document EP-A-414439) et ne doivent plus être décrits en détail ici. Ces produits, principalement des hydrocarbures normalement liquides, peuvent être récupérés, purifiés et utilisés comme matière première en raffinerie de pétrole ou dans des vapocraqueurs pétrochimiques; l'huile de cycle légère est peu sensible au craquage catalytique et peut après séparation être recyclée dans le procédé de l'invention.
Il est entendu que l'on peut apporter diverses modifications aux modes d'exécution du procédé décrit ci-dessus, sans pour autant sortir du cadre de l'invention telle que définie dans les revendications. Ainsi, le procédé de l'invention peut fonctionner en continu ou en discontinu ou en semi-continu (par exemple lorsque l'on réalise la dissolution en discontinu et le reste des opérations en continu).

Un avantage du procédé de l'invention réside dans l'utilisation d'un solvant qui est actuellement peu valorisé dans les raffineries.

L'invention sera maintenant décrite plus en détail en se référant aux figures I à III qui représentent chacune schématiquement un mode d'exécution particulier parmi les nombreux possibles.

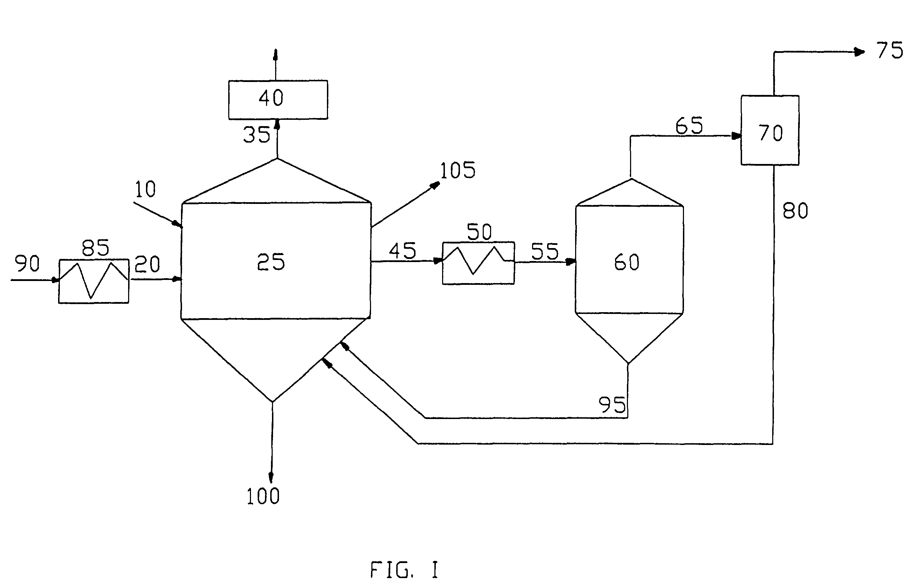

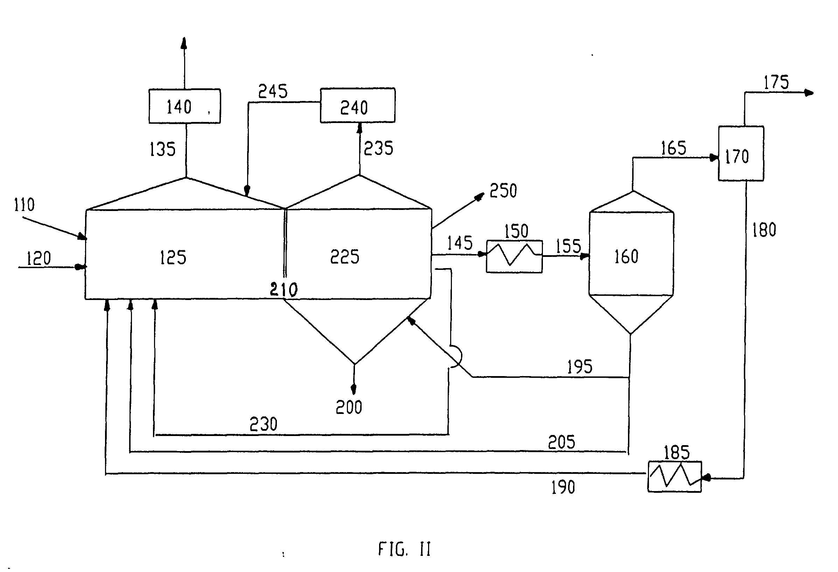

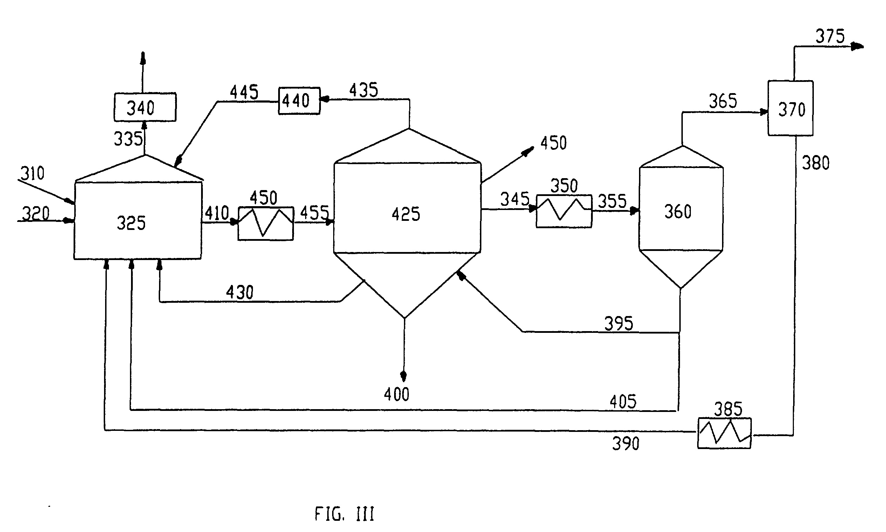

Sur la figure I, le mélange de déchets polymères d'emballage broyés (ou non) est envoyé par le système d'alimentation 10 dans un mélangeur 25 où il est mis en contact avec une huile de cycle (LCO, HCO ou leur mélange) amenée par la canalisation 90, chauffée en 85 et introduite par la canalisation 20. Après mélange et décantation, la partie légère insoluble est récupérée à la surface et évacuée en 105, tandis que la partie lourde insoluble est évacuée par la conduite 100.

Les vapeurs d'acide chlorhydrique éventuellement formées sont envoyées par la conduite 35 dans un système de neutralisation 40.

La fraction comprenant le solvant et les polymères qui s'y sont dissous, après filtration éventuelle, est récupérée en 45, chauffée en 50 et envoyée par la conduite 55 dans un réacteur de craquage thermique 60, d'où on récupère en 65 un mélange d'hydrocarbures à plus bas poids moléculaire et en 95 les composants non craqués qui sont recyclés par la conduite 95. Les hydrocarbures à plus bas poids moléculaire peuvent être séparés en 70 en fraction lourde contenant le solvant recyclé par la conduite 80 et en fraction légère 75.

Dans un mode d'exécution plus élaboré, décrit en figure II, le mélangeur (25) est divisé en deux parties, 125 et 225, reliées entre elles par une ouverture 210.

Le mélange de déchets polymères est envoyé par le système d'alimentation 110 dans un mélangeur 125 où il est mis en contact avec une huile de cycle légère et/ou lourde (LCO, HCO ou leur mélange) amenée par la canalisation 120.

Après mélange et maintien à une température d'environ 150 à 200°C, la majorité des polymères sont dissous et le PVC s'est décomposé en dégageant des vapeurs d'acide chlorhydrique envoyées par la conduite 135 dans un système de neutralisation 140. Le mélange est transféré par l'ouverture 210 dans un décanteur 225 où il est chauffé à une température de 250 à 300°C. Par sédimentation, la partie lourde insoluble est évacuée par la conduite 200 et la partie légère insoluble est récupérée à la surface et évacuée en 250.

La fraction comprenant le solvant et les polymères qui s'y sont dissous, après filtration éventuelle, est récupérée en 145, chauffée en 150 et envoyée par la conduite 155 dans un réacteur de craquage thermique 160, d'où on récupère en 165 un mélange d'hydrocarbures à plus bas poids moléculaire et en 195 et 205 les composants non craqués pour les recycler par les conduites 195 et 205 vers le décanteur 225 et le mélangeur 125 respectivement. Ce recyclage permet de chauffer et maintenir à la température désirée le décanteur et le mélangeur. Un recyclage du décanteur 225 vers le mélangeur 125 est également possible par la canalisation 230.

Les hydrocarbures à plus bas poids moléculaire sont séparés en 170 en une fraction légère 175 et une fraction lourde 180 rechauffée en 185 et recyclée dans le mélangeur 125 par la canalisation 190.
Les hydrocarbures qui s'évaporent dans le décanteur 225 sont évacués par la canalisation 235, refroidis et condensés en 240 et recyclé dans le décanteur 125 par la conduite 245. Les insolubles légers flottant à la surface du décanteur sont éliminés en 250.

Ce mode de dissolution en deux étapes permet de craquer le PVC à plus basse température dans une première cuve et de parfaire la dissolution des autres polymères et la calcination des matières organiques à plus haute température dans une seconde cuve en l'absence d'oxygène. La température plus élevée permet de réduire la viscosité pour améliorer la séparation des fractions lourdes insolubles.

Dans un troisième schéma, figure III, le mélangeur 325 et le décanteur 425 sont séparés par un réchauffeur 450. Des moyens de chauffage par source de chaleur exterme peuvent être prévus pour le mélangeur, le décanteur et le réacteur mais ils ne sont pas indispensables, la température pouvant être maintenue par les fractions recyclées.

### Exemple 1

On a pris un mélange de déchets d'emballage usagés, souillés et broyés, comprenant en poids :
- polyéthylène basse densité 30%
- polyéthylène haute densité 20%
- polypropylène 20%
- polystyrène 14%
- PVC 8%
- PET 8%
et se présentant sous forme (en poids) de :
- bouteilles, corps creux 38%
- raviers 21%
- film 30%
- mousse 11%

Les déchets ont été traités selon le mode d'exécution décrit par la figure I. Le solvant était de l'huile de cycle légère (220-350°C, 70% aromatiques, rapport monocycliques : bicycliques égal à 1:1, densité 0,94). La température dans le réacteur 115 était de 200°C; elle était de 300°C dans le réacteur 120. Le temps de résidence était d'une demi-heure dans chaque réaction. On a utilisé de l'oxyde de calcium pour neutraliser l'acide chlorhydrique. Le réacteur de craquage était un réacteur de craque thermique, opérant à 400°C. On a obtenu un mélange d'hydrocarbures ayant la courbe de distillation suivante :

| | |
|---|---|
| 100 - 221°C | 15% en poids |
| 221 - 350°C | 70% en poids |
| résidu à 350°C | 15% en poids |

## Revendications

1. Procédé de conversion de déchets de polymères en mélange, contenant essentiellement du polyéthylène haute et basse densité, du polypropylène, du polystyrène, du chlorure de polyvinyle et du polyéthylène téréphtalate caractérisé en ce qu'il comprend au moins les étapes de :
(1) mise en contact à une température supérieure à 120°C des polymères, broyés ou non, avec un solvant formé d'une coupe hydrocarbonée ayant une température d'ébullition supérieure à 180°C et composée majoritairement d'hydrocarbures aromatiques;
(2) extraction des gaz de décomposition se formant à l'étape (1);
(3) récupération d'une solution de polymères dont on a éliminé la majorité des déchets insolubles lourds et légers;
(4) traitement de cette solution de polymères par un procédé de craquage choisi parmi le craquage thermique et le craquage catalytique.

2. Procédé selon la revendication 1, caractérisé en ce que l'on utilise comme solvant une huile de cycle légère ayant une température d'ébullition comprise entre 220 et 350°C.

3. Procédé selon la revendication 1, caractérisé en ce que l'on utilise comme solvant une coupe ayant une température d'ébullition supérieure à 350°C.

4. Procédé selon la revendication 1, caractérisé en ce que l'on utilise comme solvant un mélange d'huile de cycle légère et d'huile de cycle lourde.

5. Procédé selon l'une quelconque des revendications 1 à 4, caractérisé en ce que le rapport des hydrocarbures aromatiques monocycliques et bicycliques dans le solvant est compris entre 2:1 et 1:2.

6. Procédé selon l'une quelconque des revendications 1 à 5, dans lequel on neutralise l'acide chlorhydrique formé par dégradation thermique lors de la dissolution de chlorure de polyvinyle présent.

7. Procédé selon l'une quelconque des revendications 1 à 6, dans lequel on sature tout ou partie des liaisons insaturées sur le squelette hydrocarboné résultant de la décomposition du chlorure de polyvinyle présent.

8. Procédé selon l'une quelconque des revendications 1 à 7, dans lequel on réalise la dissolution en deux étapes, la première à une température de 120 à 250°C, la seconde à une température de 250 à 400°C.

9. Procédé selon la revendication 8, dans lequel la seconde étape est réalisée en l'absence d'oxygène.

10. Procédé selon l'une quelconque des revendications 1 à 7, dans lequel on réalise la dissolution en une étape, à une température comprise entre 120 et 350°C.

11. Procédé selon l'une quelconque des revendications 1 à 10, dans lequel on convertit les polymères dissous par craquage thermique.

12. Procédé selon l'une quelconque des revendications 1 à 10, dans lequel on convertit les polymères dissous par craquage catalytique.

13. Procédé selon l'une quelconque des revendications 1 à 12 dans lequel la coupe hydrocarbonée pouvant servir de solvant et obtenue après craquage est recyclée dans le procédé de l'invention.

## Patentansprüche

1. Verfahren zur Umwandlung von Polymerabfällen in einer Mischung, welche im wesentlichen Hart- und Weichpolyethylen, Polypropylen, Polystyrol, Polyvinylchlorid und Polyethylenterephtalat enthält, dadurch gekennzeichnet, daß es wenigstens die Schritte aufweist:
(1) Kontaktierung der zermahlenen oder nicht zermahlenen Polymere bei einer Temperatur oberhalb von 120°C mit einem Lösemittel, welches aus einer kohlenwasserstoffhaltigen Fraktion mit einer Siedetemperatur oberhalb von 180°C gebildet ist, welche überwiegend aus aromatischen Kohlenwasserstoffen besteht;
(2) Extraktion der Zersetzungsgase, welche sich bei dem Schritt (1) bilden;
(3) Rückgewinnung einer Polymerlösung, aus welcher die Mehrzahl der schweren und leichten unlöslichen Abfälle entfernt wurde
(4) Behandlung dieser Polymerlösung mit einem Crackingverfahren, welches aus dem thermischen Kracken und dem katalytischen Kracken ausgewählt ist.

2. Verfahren gemäß Anspruch 1, dadurch gekennzeichnet, daß als Lösemittel ein zyklisches Leichtöl mit einer Siedetemperatur zwischen 220 und 350°C verwendet wird.

3. Verfahren gemäß Anspruch 1, dadurch gekennzeichnet, daß als Lösemittel eine Fraktion mit einer höheren Siedetemperatur als 350°C verwendet wird.

4. Verfahren gemäß Anspruch 1, dadurch gekennzeichnet, daß als Lösemittel eine Mischung aus zyklischem Leichtöl und zyklischem Schweröl verwendet wird.

5. Verfahren gemäß irgendeinem der Ansprüche 1 bis 4, dadurch gekennzeichnet, daß das Verhältnis der monozyklischen und bizyklischen aromatischen Kohlenwasserstoffe in dem Lösemittel zwischen 2:1 und 1:2 liegt.

6. Verfahren gemäß irgendeinem der Ansprüche 1 bis 5, bei welchem die durch thermischen Abbau während der Auflösung des vorhandenen Polyvinylchlorids gebildete Salzsäure neutralisiert wird.

7. Verfahren gemäß irgendeinem der Ansprüche 1 bis 6, bei welchem alle oder ein Teil der ungesättigten Verbindungen an dem Kohlenwasserstoffgerüst, welches sich aus der Zersetzung des vorhandenen Polyvinylchlorids ergibt, gesättigt werden.

8. Verfahren gemäß irgendeinem der Ansprüche 1 bis 7, bei welchem die Auflösung in zwei Schritten durchgeführt wird, und zwar der erste bei einer Temperatur von 120 bis 250°C, und der zweite bei einer Temperatur von 250 bis 400°C.

9. Verfahren gemäß Anspruch 8, bei welchem der zweite Schritt in Abwesenheit von Sauerstoff durchgeführt wird.

10. Verfahren gemäß irgendeinem der Ansprüche 1 bis 7, bei welchem die Auflösung in einem Schritt bei einer Temperatur zwischen 120 und 350°C durchgeführt wird.

11. Verfahren gemäß irgendeinem der Ansprüche 1 bis 10, bei welchem die aufgelösten Polymere durch thermisches Cracking umgewandelt werden.

12. Verfahren gemäß irgendeinem der Ansprüche 1 bis 10, bei welchem die aufgelösten Polymere durch katalytisches Cracking umgewandelt werden.

13. Verfahren gemäß irgendeinem der Ansprüche 1 bis 12, bei welchem die kohlenstoffhaltige Fraktion, welche als Lösemittel dienen kann und nach Cracking erhalten wird, in dem Verfahren der Erfindung wiederverwertet wird.

## Claims

1. Method of converting mixed polymer waste containing essentially, high- and low-density polyethylene, polypropylene, polystyrene, polyvinyl chloride and polyethylene terephthalate, **characterised in that** it comprises at least the stages of:
1. bringing into contact at a temperature higher than 120°C polymers, crushed or otherwise, with a solvent formed from a hydrocarbonic fraction having a boiling point higher than 180°C and composed by a majority of aromatic hydrocarbons;
2. extraction of the decomposition gases forming in stage (1);
3. recovery of a polymer solution from which the majority of the heavy and light insoluble waste has been eliminated;
4. treatment of this polymer solution by a method of cracking chosen from thermal cracking and catalytic cracking.

2. Method according to claim 1, **characterised in that** the solvent used is a light cycle oil having a boiling point of between 220 and 350°C.

3. Method according to claim 1, **characterised in that** a fraction having a boiling point higher than 350°C is used as the solvent.

4. Method according to claim 1, **characterised in that** a mixture of light cycle oil and heavy cycle oil is used as the solvent.

5. Method according to any one of claims 1 to 4, **characterised in that** the ratio of monocyclic and bicyclic aromatic hydrocarbons in the solvent is between 2:1 and 1:2.

6. Method according to any one of claims 1 to 5, wherein the hydrochloric acid formed by thermal degradation during the dissolution of the polyvinyl chloride present is neutralised.

7. Method according to any one of claims 1 to 6, wherein all or part of the unsaturated bonds on the hydrocarbonic skeleton resulting from the decomposition of the polyvinyl chloride present is saturated.

8. Method according to any one of claims 1 to 7, wherein the dissolution is carried out in two stages, the first at a temperature of between 120 and 250°C, the second at a temperature of between 250 and 400°C.

9. Method according to claim 8, wherein the second stage is realised in the absence of oxygen.

10. Method according to any one of claims 1 to 7, wherein the dissolution is realised in one stage, at a temperature of between 120 and 350°C.

11. Method according to any one of claims 1 to 10, wherein the dissolved polymers are converted by thermal cracking.

12. Method according to any one of claims 1 to 10, wherein the dissolved polymers are converted by catalytic cracking.

13. Method according to any one of claims 1 to 12, wherein the hydrocarbon fraction which can serve as a solvent and is obtained after cracking is recycled in the method of the invention.
